Europäisches Patentamt

European Patent Office

Office européen des brevets

(11) Veröffentlichungsnummer: **0 036 912**
**A1**

## (12) EUROPÄISCHE PATENTANMELDUNG

(21) Anmeldenummer: **80200583.5**

(22) Anmeldetag: **19.06.80**

(51) Int. Cl.³: **B 25 J 15/00**

(30) Priorität: **26.03.80 EP 80200279**

(43) Veröffentlichungstag der Anmeldung:
**07.10.81 Patentblatt 81/40**

(84) Benannte Vertragsstaaten:
**CH DE LI SE**

(71) Anmelder: **Maschinenfabrik Meyer AG.**
**Oeschbachstrasse 428**
**CH-4707 Deitingen (Solothurn)(CH)**

(72) Erfinder: **Heid, Rudolf**
**Dr. Probst-Strasse**
**CH-4708 Luterbach(CH)**

(72) Erfinder: **Schär, Fritz**
**Birchacker 69d**
**CH-4555 Inkwil(CH)**

(54) **Greifer für Handhabungsgeräte.**

(57) Bei starr an einer Bewegungseinheit für Handhabungsgeräte befestigten Greifern können bei fehlpositionierten Werkstücken oder Werkstücken mit Massabweichungen Beschädigungen des Werkstücks, der Werkstückaufnahme oder des Handhabungsgeräts auftreten. Durch eine nachgiebige Aufhängung der die Greiferarme (8) tragenden Grundplatte (7) am Befestigungsflansch (1) des Greifers werden derartige Schäden eliminiert. Federmittel (4,6) zwischen Grundplatte (7) und Befestigungsflansch (1) bringen die Grundplatte (7) in eine definierte Position (Z) bezüglich des Befestigungsflansches (1), sobald keine äusseren Kräfte auf die Greiferarme (8) bzw. die Grundplatte (7) mehr einwirken.

FIG.1

0036912

350/80
He/ms

Maschinenfabrik Meyer AG, Deitingen (SO)
============================================

## Greifer für Handhabungsgeräte

Die Erfindung bezieht sich auf einen Greifer für Handhabungsgeräte, umfassend einen Befestigungsflansch mit
mindestens einer Anbringungsfläche an eine Bewegungseinheit, auf einer Grundplatte angeordnete, relativ zueinander bewegliche Greiferarme und einem Betätigungsorgan für die Greiferarme.

Greifer dieser Art werden im Zusammenhang mit Handhabungsgeräten zur Beschickung von Werkzeugmaschinen, bei Entnahme- und Einlegeeinrichtungen und dergl. verwendet
(vgl. "Technische Rundschau", Bern, Nr. 50 vom 11.12.1979,
Seiten 17 - 24). Bei einer Reihe von Anwendungsfällen
kann es vorkommen, dass das zu ergreifende Werkstück bezüglich einer oder mehrerer Koordinaten ausserhalb der
Sollposition an der Entnahmestelle positioniert ist, während der Greifer seine Sollposition eingenommen hat. Ebenso ist der umgekehrte Fall denkbar. Die Folge dieser Abweichungen sind häufig Beschädigungen der Werkstückauf-

- 2 -

nahmeeinrichtungen und/oder des Handhabungsgeräts.

Beschädigungen des Handhabungsgeräts und/oder der Werkstückaufnahmeeinrichtung können auch dann auftreten, wenn das Werkstück, z.B. infolge fertigungstechnisch bedingter Umstände, Massabweichungen an der Greifstelle aufweist.

Es ist Aufgabe der Erfindung, einen Greifer für Handhabungsgeräte zu schaffen, der es ermöglicht, ausserhalb der Sollposition gelagerte Werkstücke und/oder Werkstücke mit Massabweichungen ohne Beschädigung von Werkstückaufnahme und/oder Handhabungsgerät oder des Werkstücks selbst handzuhaben.

Zur Lösung dieser Aufgabe ist erfindungsgemäss vorgesehen, dass der Befestigungsflansch gegenüber der Grundplatte in mindestens einer Koordinatenrichtung beweglich angeordnet ist, und dass in der jeweiligen Koordinatenrichtung wirkende Federmittel vorgesehen sind, welche die Grundplatte in eine definierte Position bezüglich des Befestigungsflansches bringen, sobald keine äusseren Kräfte auf die Greiferarme bzw. die Grundplatte einwirken.

Durch die erfindungsgemässe Ausbildung des Greifers werden sowohl beim Lade- als auch beim Entladevorgang die Werkstückaufnahmeeinrichtungen vor Beschädigungen geschützt, da nunmehr der Greifer (zusammen mit seiner Grundplatte) gegenüber den als starr anzusehenden restlichen Teilen des Handhabungsgerätes nachgeben kann. Wird das Werkstück von der Einspannstelle, z.B. einer Werkzeugmaschine, freigegeben, kehrt der Greifer in eine definierte Lage bezüglich

- 3 -

des Befestigungsflansches zurück. Umgekehrt erlaubt es die Nachgiebigkeit der Greiferbefestigung am Befestigungsflansch, Werkstücke an Orten zu übergeben, wo die Endlage des Handhabungsgeräts von der Sollposition abweicht.

Insbesondere bei Handhabungsgeräten für Werkstücke, die den Einsatz von zwei oder mehr Greifern erfordern, z.B. langgestreckten Werkstücken wie Wellen, Rohre und dergl. lassen sich die auf das Werkstück und/oder das Handhabungsgerät einwirkenden Kräfte auf zulässige Werte beschränken.

Ein weiterer Vorteil der Erfindung ist darin zu sehen, dass die Anforderungen an die Regel- und Steuereinrichtung des Handhabungsgerätes herabgesetzt werden können, was letztendlich dessen Wirtschaftlichkeit erhöht.

Gemäss der in Anspruch 2 definierten Weiterbildung des Erfindungsgegenstandes ist für je eine Koordinatenrichtung ein Blattfederpaar zwischen Befestigungsflansch und Grundplatte vorgesehen, wobei im Falle von zwei senkrecht zueinander verlaufenden Richtungen ein erstes Blattfederpaar zwischen dem Befestigungsflansch und einem Zwischenteil ein anderes Blattfederpaar zwischen dem Zwischenteil und der Grundplatte und gegenüber dem ersten Blattfederpaar um 90° versetzt angeordnet ist (Anspruch 3).

Der Einsatz von Blattfedern beeinträchtigt die Steifigkeit des Greifers in den bzw. der anderen Koordinatenrichtung nur unwesentlich. Die Federwege und die Nachgiebigkeit lassen sich in einfacher Weise durch entsprechende Dimensionierung der Blattfedern einstellen.

- 4 -

Bei einer anderen, im Anspruch 4 gekennzeichneten alternativen Weiterbildung des Erfindungsgegenstandes ist zwischen dem Befestigungsflansch und der Grundplatte eine Prismenführung, wie sie beispielsweise im Zusammenhang mit Werkzeugmaschinen prinzipiell bekannt ist, vorgesehen. Analog zur Ausführungsform nach Anspruch 3 sind für zwei senkrecht aufeinanderstehende Koordinatenrichtungen zwei übereinander angeordnete und um 90° versetzte Prismenführungen, einem Kreuzschlitten vergleichbar, vorgesehen (Anspruch 5), wobei in beiden Fällen innerhalb der Prismenführung(en) in Bewegungsrichtung wirkende Federn oder Federpaare vorgesehen sind.

Bei einer weiteren Ausgestaltung der Erfindung nach Anspruch 6 ist die Grundplatte im Befestigungsflansch pendelnd gelagert. Bei Bewegungen in Richtung nur einer Koordinate erfolgt die Lagerung der Grundplatte in einem Scharniergelenk, während bei Bewegungen in zwei Koordinatenrichtungen die Lagerung in einem Kugelgelenk erfolgt.

Bei allen Ausführungsformen lassen sich elektrische, hydraulische bzw. pneumatische Verbindungen zwischen dem Befestigungsflansch und der Grundplatte unterbringen. Zur hydraulischen bzw. pneumatischen Verbindung eignen sich entweder flexible Rohr- oder Schlauchleitungen oder im wesentlichen als starr anzusehende Rohre, die sowohl im Befestigungsflansch als auch in der Grundplatte des Greifers nachgiebig eingespannt sind.

Die Erfindung wird nachstehend anhand von in der Zeichnung schematisch dargestellten Ausführungsbeispielen näher erläutert.

- 5 -

In der Zeichnung zeigt

Fig. 1   eine perspektivische Darstellung eines ersten Ausführungsbeispiels eines Greifers für Handhabungsgeräte, bei dem zwischen dem Befestigungsflansch
und der Grundplatte 2 Blattfederpaare angeordnet
sind,

Fig. 2   eine Seitenansicht des Greifers nach Fig. 1, teilweise im Schnitt,

Fig. 3   eine zweite Seitenansicht des Greifers nach Fig. 1,
teilweise im Schnitt,

Fig. 4   eine perspektivische Darstellung eines zweiten Ausführungsbeispiels eines Greifers mit Kreuzschlittenführung zwischen Befestigungsflansch und Grundplatte,

Fig. 5   einen Längsschnitt durch die Kreuzschlittenführung
des Greifers nach Fig. 4,

Fig. 6   eine perspektivische Darstellung eines dritten Ausführungsbeispiels eines Greifers mit einem Kugelgelenk zwischen Befestigungsflansch und Grundplatte
und

Fig. 7   einen Längsschnitt durch den Greifer nach Fig. 5 in
einer Ebene ausserhalb der Greiferarme.

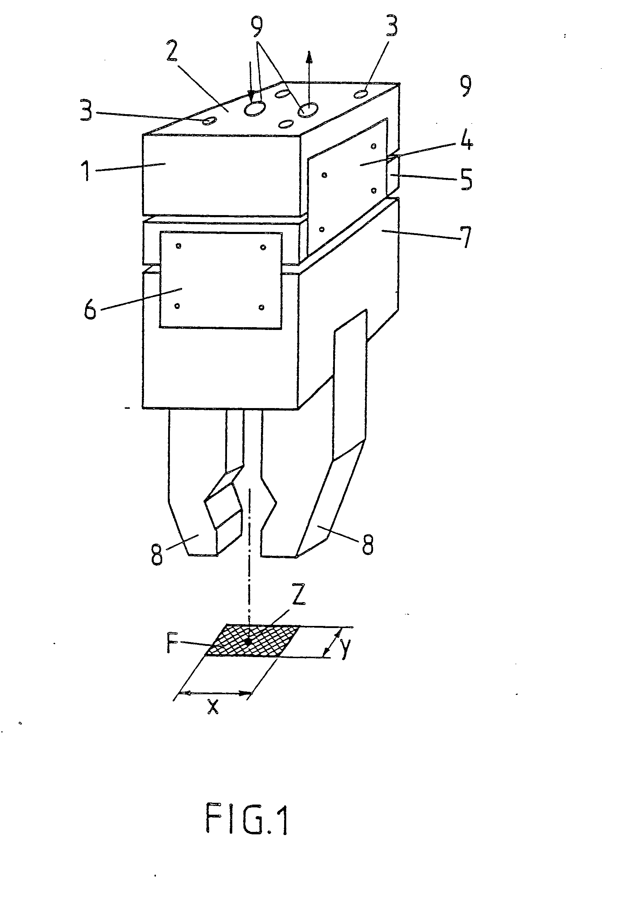

Der Greifer nach Fig. 1 weist einen Befestigungsflansch  1 mit einer Anbringungsfläche 2 zur Verbindung mit einer nicht dargestellten Bewegungseinheit eines Handhabungsgeräts auf. Zu diesem Zweck ist der Befestigungsflansch mit einer Reihe von Sacklochgewindebohrungen 3 versehen. An zwei gegenüberliegenden Seitenflächen sind zwei Blattfedern 4 befestigt, deren freie Enden mit einem Zwischenteil 5 verbunden sind. An den freien Seitenflächen des Zwischenteils 5 sind gleichfalls zwei Blattfedern 6 befestigt. Die vom Befestigungsflansch 1 abgewandten Enden der Blattfedern 6 sind mit einer Grundplatte 7 verbunden. An der Grundplatte 7 sind paarig angeordnete Greiferarme 8 gelenkig gelagert. In die Grundplatte 7 ist das Betätigungsorgan für die Greiferarme 8 integriert. Die Zufuhr des Betätigungsmediums erfolgt durch Bohrungen 9 im Befestigungsflansch 1. Sowohl der Befestigungsflansch 1 als auch die Grundplatte 7 sind vom Zwischenteil 5 beabstandet. In Verbindung mit den Blattfederpaaren 4 und 6 ermöglicht dies Bewegungen der Grundplatte 7 und der mit ihr verbundenen Greiferarme 8 in zwei Koordinatenrichtungen x, y. Je nach wirksamer Länge der Blattfedern und Abstand der Teile 1, 5 und 7 ergibt sich eine Ausschwingfläche F mit dem Zentrum Z.

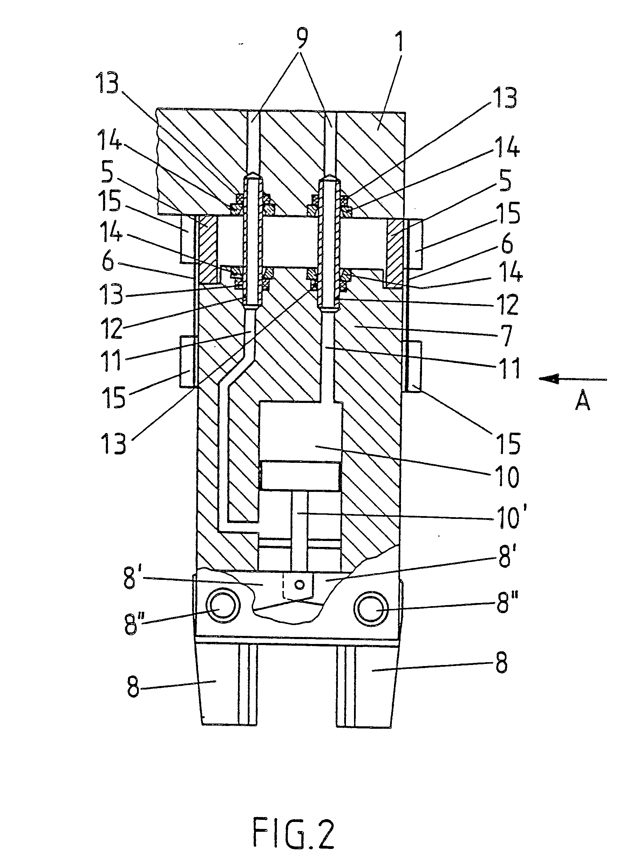

In der Seitenansicht gemäss Fig. 2 zeigt eine beispielhafte technische Realisierung eines Greifers nach Fig. 1, wobei die gleichen Teile mit denselben Bezugszeichen versehen sind. Die Grundplatte 7, hier als Quader ausgebildet, enthält im Inneren das Betätigungsorgan, eine Kolben/Zylinderanordnung 10, für die Greiferarme. Die Kolbenstange 10' ist gelenkig mit nach innen abgewinkelten Enden 8' der Greiferarme 8 verbunden. Bei Betätigung der Kolben/Zylinderanordnung schwenken die Greiferarme um ihre Drehachsen 8''.

Die Zufuhr des Betätigungsmediums in der Grundplatte 7 erfolgt durch Bohrungen 11, die an dem den Greiferarmen 8 abgewandten Ende in Erweiterungen 12 enden. In diese Erweiterungen münden Rohre 12, welche durch den Zwischenteil 5 hindurchtreten und in die Bohrungen 9 im Befestigungsflansch 1 hineinreichen. Die dem Zwischenteil zugewandten Enden dieser Bohrungen sind gleichfalls erweitert. Die Abdichtung der Rohre 12 gegenüber dem Innenraum des Zwischenteils 5 erfolgt jeweils durch Ringdichtungen 13. Sicherungsringe 14 dienen zur axialen Fixierung der Ringdichtungen 13. Die Ausbildung der Sicherungsringe mit einer konischen Erweiterung der Bohrung auf der dem Zwischenteil 5 zugewandten Ende ermöglicht Schwenkbewegungen der Rohre um die Dichtstelle bei Auslenkung der Grundplatte 7.

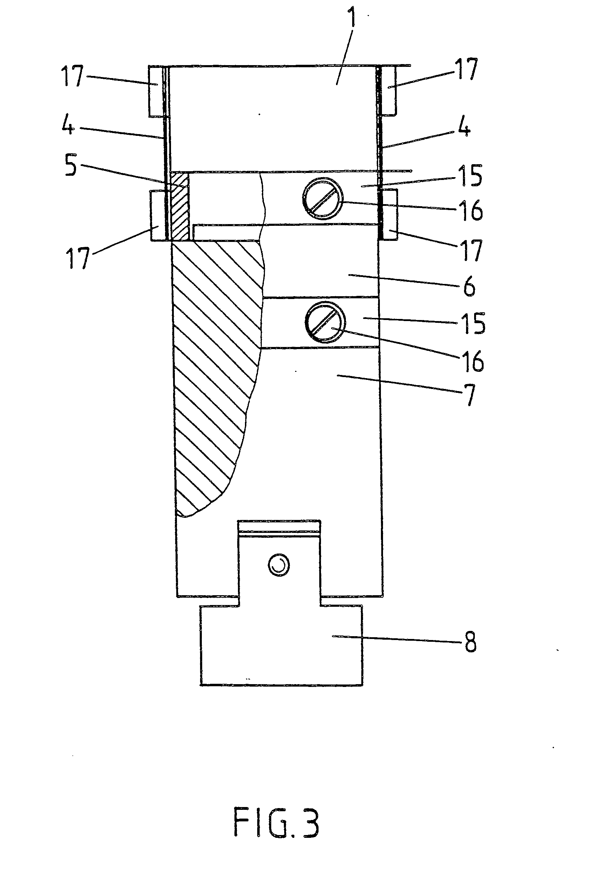

Wie aus Fig. 2 ferner hervorgeht, sind die Blattfedern 6 am Zwischenteil 5 und an der Grundplatte 7 unter Zwischenschaltung von streifenförmigen Beilagen 15 durch Schrauben 16 (Fig. 3 ) befestigt.

Fig. 3, in der gleichfalls gleiche Teile mit denselben Bezugszeichen versehen sind, zeigt eine Seitenansicht des Greifers nach Fig. 2, teilweise in Schnittdarstellung, in Richtung des Pfeiles A der Fig. 2. Die Blattfedern 4 sind am Befestigungsflansch 1 und am Zwischenteil 5 unter Zwischenschaltung von streifenförmigen Beilagen 17 befestigt.

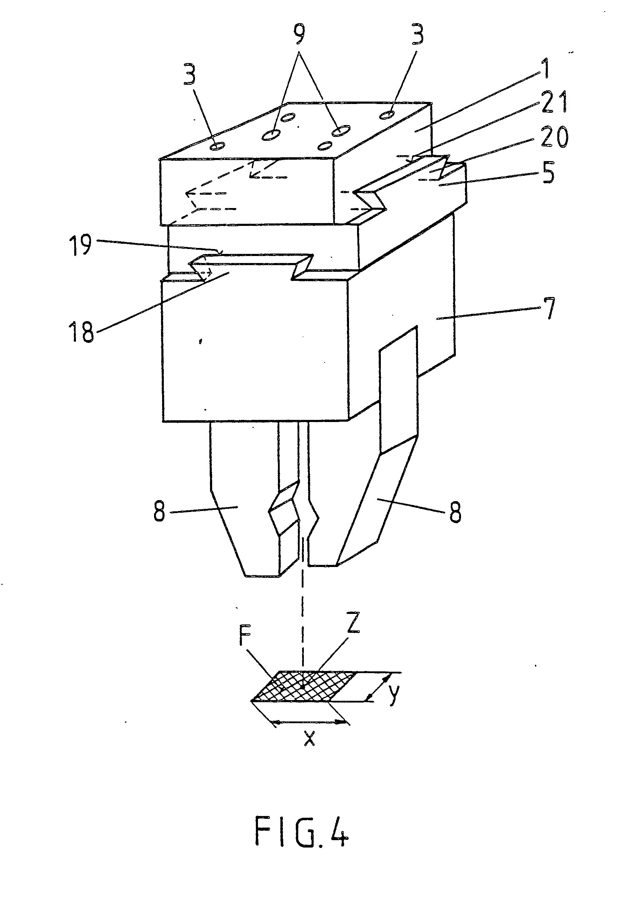

In der stark vereinfachten perspektivischen Darstellung eines Greifers nach Fig. 4 ist die den Greiferarmen 8 ab-

- 8 -

gewandte Fläche der Grundplatte 7 mit einer schwalbenschwanzförmigen Leiste 18, die dieser Feder zugewandte
Fläche des Zwischenteils 5 mit einer entsprechenden
schwalbenschwanzförmigen Nut 19 versehen. In gleicher
Weise trägt die dem Befestigungsflansch 1 zugewandte Fläche des Zwischenteils 5 eine schwalbenschwanzförmige
Leiste 20, während die dem Zwischenteil 5 zugewandte
Fläche des Befestigungsflansches mit einer entsprechenden
schwalbenschwanzförmigen Nut 21 versehen ist.

Die Nuten 19, 21 bzw. die Leisten 18, 20 sind jeweils um
$90^\circ$ gegeneinander versetzt (Kreuzschlitzführung).

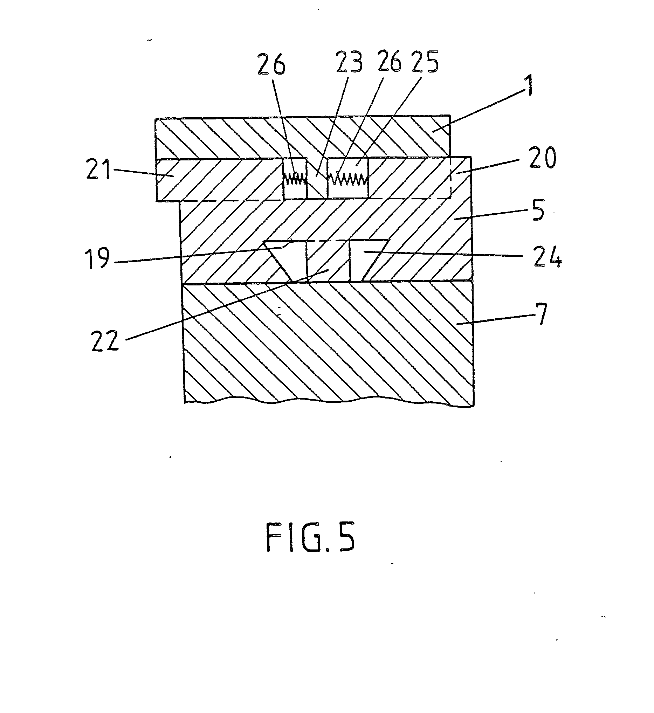

Wie aus dem Längsschnitt gemäss Fig. 5 hervorgeht, weisen
die Nuten 19 und 21 im mittleren Abschnitt je einen Quersteg 22 bzw. 23 auf. Die Leisten 18 und 20 sind jeweils
im mittleren Abschnitt durch eine Quernut 24 bzw. 25 versehen, wobei die Breite der Nuten wesentlich grösser ist
als die Breite der Querstege 22 bzw. 23. Im freien Raum
der Quernuten 24 und 25 sind jeweils zwischen den Nutseitenwänden und den Stegwänden Druck- oder Zugfedern 26
angeordnet. Bei beidseitiger Auslenkung des Zwischenteils
5 gegenüber dem Befestigungsflansch 1 erzeugen diese Federn ein Rückstellmoment. Gleiches gilt für Auslenkungen der
Grundplatte 7 gegenüber dem Zwischenteil 5.

Mit einem derart ausgebildeten Greifer lässt sich eine
Ausschwingfläche F für die Greiferarme 8 erzielen, deren
Koordinaten x, y im wesentlichen durch die Abmessungen der
Quernuten und Querstege bestimmt ist.

- 9 -

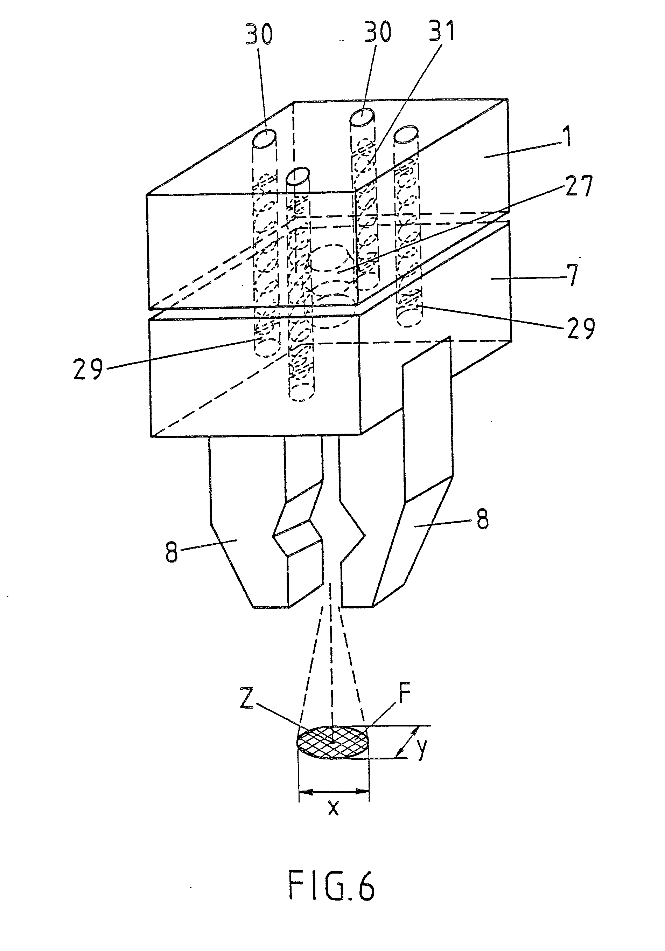

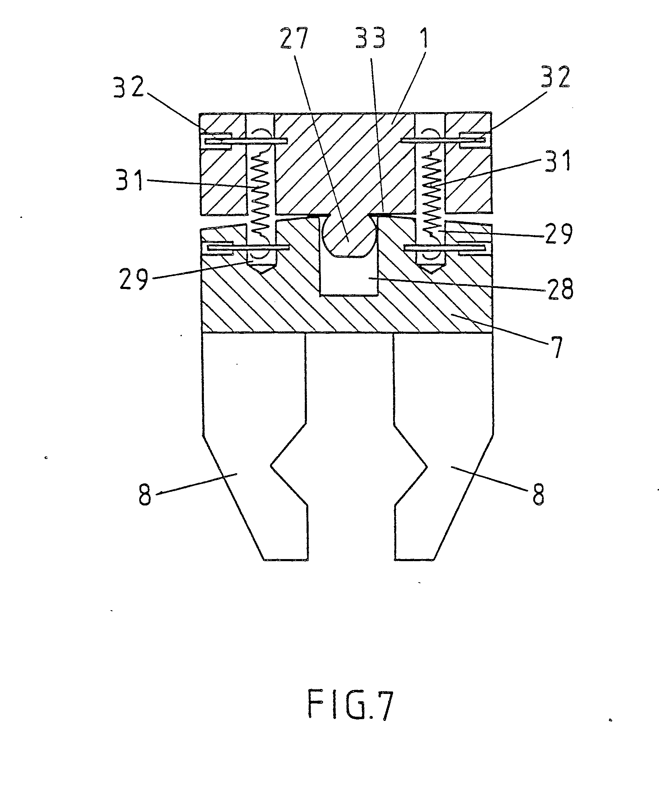

Während die bislang beschriebenen Ausführungsformen des Erfindungsgegenstandes Ausschwingflächen mit rechteckförmiger Begrenzung aufweisen, ermöglicht die in den Figuren 6 und 7 dargestellte beispielsweise Ausführung eines Greifers eine solche mit Kreis- oder Ellipsenform. Der Befestigungsflansch 1 ist auf der der Grundplatte zugewandten Fläche eben und mit einem mittig angeordneten Kugelzapfen 27 versehen, der in eine mittig angeordnete Zapfenbohrung 28 im Grundplattenoberteil eingreift. Die dem Befestigungsflansch 1 zugewandte Fläche der Grundplatte 7 ist allseitig nach aussen gewölbt und ermöglicht somit Schwenkbewegungen der Grundplatte in allen Richtungen, die wiederum in einer kreisförmigen Ausschwingfläche F der Greiferarme 8 resultieren. Das Grundplattenoberteil ist ferner mit vier punktsymmetrisch zur Bohrung 28 angeordneten Sacklochbohrungen 29 versehen, die mit Durchgangsbohrungen 30 im Befestigungsflansch 1 fluchten. In den Bohrungen sind Zugfedern 31 untergebracht, die an quer zu den Bohrungen verlaufenden Stiften 32 aufgehängt sind. Die Zugfedern bewirken bei Fehlen einer äusseren Kraft auf die Grundplatte 7 (oder die Greiferarme) das Verbleiben bzw. die Rückkehr der Grundplatte in eine definierte Mittellage. Wird der sich unmittelbar an die Bohrung 28 anschliessende Bereich 33 des Grundplattenoberteils gegenüber dem restlichen Bereich mit einer geringeren Wölbung versehen oder ganz abgeflacht, ergibt sich ein zuverlässiges Rückkehren in die definierte Ausgangslage.

Die Erfindung beschränkt sich selbstverständlich nicht auf das in der Zeichnung Dargestellte. Erfordert ein bestimm-

- 10 -

ter Anwendungsfall lediglich Bewegungen in einer Koordinatenrichtung, z.B. der x-Richtung, so können im Falle der
Figuren 1 bis 3 die Blattfederpaare 6, im Falle der Fig. 4
die Schlittenführung 18, 19 entfallen. Bei der Ausführungsform nach den Figuren 5 und 6 tritt an die Stelle der Kugelgelenkverbindung zwischen Befestigungsflansch 1 und
Grundplatte 7 ein Scharniergelenk, alternativ eine
Schneidenlagerung der Grundplatte 7 im Befestigungsflansch.

Wie aus den beschriebenen und dargestellten Ausführungsformen des Erfindungsgegenstandes ohne weiteres erhellt,
bieten sämtliche Verbindungsanordnungen genügend Raum zum
Hindurchführen sowohl von Leitungen für das Betätigungsorgan als auch von Steuer- oder Meldeleitungen. Die
Leitungen für das Betätigungsmedium können - wie im Zusammenhang mit den Figuren 2 und 3 beschrieben - starre
Rohre 12 sein, die flexibel im Befestigungsflansch und/oder
in der Grundplatte gelagert sind, oder die Leitungen
selbst sind flexibel.

- 11 -

Patentansprüche

1. Greifer für Handhabungsgeräte, umfassend einen Befestigungsflansch mit mindestens einer Anbringungsfläche an eine Bewegungseinheit, auf einer Grundplatte angeordnete, relativ zueinander bewegliche
Greiferarme und einem Betätigungsorgan für die Greiferarme, dadurch gekennzeichnet, dass der Befestigungsflansch (1) gegenüber der Grundplatte (7) in mindestens einer Koordinatenrichtung (x, y) beweglich
angeordnet ist und dass in der jeweiligen Koordinatenrichtung wirkende Federmittel (4, 6, 26, 30) vorgesehen sind, welche die Grundplatte (7) in eine definierte Position (Z) bezüglich des Befestigungsflansches (1) bringen, sobald keine äusseren Kräfte
auf die Greiferarme (8) bzw. die Grundplatte (7) einwirken.

2. Greifer nach Anspruch 1, dadurch gekennzeichnet, dass
für jede Koordinatenrichtung (x, y) je ein Blattfederpaar (4, 6) zwischen Befestigungsflansch (1) und Grundplatte (7) vorgesehen ist.

3. Greifer nach Anspruch 2, dadurch gekennzeichnet, dass ein erstes Blattfederpaar (4) zwischen dem Befestigungsflansch (1) und einem Zwischenteil (5) ein zweites
Blattfederpaar (6) zwischen dem Zwischenteil (5) und
der Grundplatte (7) und gegenüber dem ersten Blattfederpaar (4) um 90° versetzt angeordnet ist (Fig. 1).

4. Greifer nach Anspruch 1, dadurch gekennzeichnet, dass
zwischen dem Befestigungsflansch (1) und der Grundplatte (7) für jede, Koordinatenrichtung (x, y) je
eine Prismenführung (18, 19; 20, 21) vorgesehen ist.

5. Greifer nach Anspruch 4, dadurch gekennzeichnet, dass
bei zwei senkrecht aufeinanderstehenden Koordinatenrichtungen zwei übereinander angeordnete, um 90° gegeneinander versetzte Prismenführungen in Form eines
Kreuzschlittens vorgesehen sind, wobei innerhalb der
Prismenführungen jeweils in Bewegungsrichtung wirkende Zug- oder Druckfederpaare (26) angeordnet
sind (Fig. 4).

6. Greifer nach Anspruch 1, dadurch gekennzeichnet, dass
die Grundplatte (7) auf dem Befestigungsflansch (1)
pendelnd gelagert ist.

7. Greifer nach Anspruch 6, dadurch gekennzeichnet, dass
auf einer der gegeneinander gerichteten Flächen von
Grundplatte (7) und Befestigungsflansch (1) ein Kugelzapfen (27), auf der anderen Fläche eine Bohrung
(28) angeordnet ist.

8. Greifer nach Anspruch 7, dadurch gekennzeichnet, dass
eine der beiden Flächen allseitig nach aussen gewölbt

- 13 -

ist.

9. Greifer nach Anspruch 8, dadurch gekennzeichnet, dass der Krümmungsradius der Wölbung im unmittelbar der Bohrung (28) benachbarten Bereich (33) grösser ist als derjenige der restlichen Fläche.

10. Greifer nach einem der Ansprüche 1 bis 9, dadurch gekennzeichnet, dass die Leitungen zum Betätigungsorgan der Greifarme (8) innerhalb des Greifers geführt sind.

11. Greifer nach Anspruch 10, dadurch gekennzeichnet, dass die Verbindungsleitungen flexible Rohrleitungen oder flexibel im Befestigungsflansch (1) und/oder der Grundplatte (7) eingespannte Rohre (12) sind.

B e z e i c h n u n g s l i s t e

| | | |
|---|---|---|
| 1 | = | Befestigungsflansch |
| 2 | = | Anbringungsfläche |
| 3 | = | Gewindebohrung |
| 4 | = | Blattfedern zwischen Befestigungsteil und Zwischenteil |
| 5 | = | Zwischenteil |
| 6 | = | Blattfedern zwischen Zwischenteil und Grundplatte |
| 7 | = | Grundplatte |
| 8 | = | Greiferarme |
| 8' | = | abgewinkelte Enden der Greiferarme 8 |
| 8'' | = | Drehachsen der Greiferarme 8 |
| 9 | = | Bohrungen im Befestigungsflansch |
| 10 | = | Betätigungsorgan der Greiferarme |
| 10' | = | Kolbenstange des Betätigungsorgans 10 |
| 11 | = | Bohrungen in der Grundplatte |
| 12 | = | Rohre |
| 13 | = | Ringdichtungen |
| 14 | = | Sicherungsringe |
| 15 | = | streifenförmige Beilagen der Blattfedern 4 |
| 16 | = | Schrauben |
| 17 | = | streifenförmige Beilagen der Blatt-federn 6 |

- 2 -

18 = schwalbenschwanzförmige Leiste im Zwischenteil 5

19 = schwalbenschwanzförmige Nut in der Grundplatte 7

20 = schwalbenschwanzförmige Leiste im Zwischenteil 5

21 = schwalbenschwanzförmige Nut im Befestigungsflansch 1

22 = Quersteg in der Nut 19

23 = Quersteg in der Nut 21

24 = Quernut in der Leiste 18

25 = Quernut in der Leiste 20

26 = Zug- oder Druckfedern

27 = Kugelzapfen

28 = Zapfenbohrung

29 = Sacklochbohrungen in der Grundplatte 7

30 = Durchgangsbohrungen im Befestigungsflansch 1

31 = Zugfedern

32 = Stifte

33 = flacher Bereich der Grundplattenoberseite

FIG.1

350/80

0036912

FIG.2

350/80

0036912

FIG.3

350/80

FIG.4

0036912

FIG.5

350/80

FIG.6

0036912

FIG.7

350/80

Europäisches
Patentamt

# EUROPÄISCHER RECHERCHENBERICHT

| | EINSCHLÄGIGE DOKUMENTE | | | KLASSIFIKATION DER ANMELDUNG (Int. Cl ʾ) |
|---|---|---|---|---|
| Kategorie | Kennzeichnung des Dokuments mit Angabe, soweit erforderlich, der maßgeblichen Teile | betrifft Anspruch | | |
| X | DE - A - 2 835 712 (BOSCH)<br>* Ansprüche 1-4 * | 1-3 | | B 25 J 15/00 |
| X | DE - A - 1 764 325 (VEB ELEKTRO-MAT)<br>* Seite 3, Zeilen 5-28; Ansprüche 1,2 * | 1-3, 10 | | |
| | DE - A - 2 504 127 (HITACHI)<br>* Seite 8, Zeilen 5-24 * | 1,7 | | RECHERCHIERTE SACHGEBIETE (Int. Cl. ) |
| A | DE - A - 2 358 498 (HITACHI) | 1 | | B 25 J<br>B 66 C<br>B 23 P<br>H 05 K<br>F 16 F |
| | FR - A - 2 360 379 (SORMEL)<br>* Ansprüche 1-3 * | 1-3 | | |
| | DE - A - 2 113 980 (I.B.M.)<br>* Ansprüche 1,2 * | 1-3 | | |
| A | DE - A - 1 921 707 (I.B.M.)<br>* Figur 1 * | 4 | | KATEGORIE DER GENANNTEN DOKUMENTE |
| A | DE - A - 2 843 715 (CHARBONNAGES DE FRANCE)<br>* Ansprüche 1-5 * | 4-6 | | X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| A | CH - A - 289 153 (VON BEZOLD-KILB)<br>* Figur 2 * -- ./. | 8 | | |

&: Mitglied der gleichen Patent-familie. übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 01-07-1981 | LAMMINEUR |

EPA form 1503.1   06.78

**Europäisches Patentamt**

# EUROPÄISCHER RECHERCHENBERICHT

| | EINSCHLÄGIGE DOKUMENTE | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | |
| A | DE - A - 1 531 252 (SIERSATOM) | 7 | |
| | ---- | | |
| | | | RECHERCHIERTE SACHGEBIETE (Int. Cl. ³) |